# EUROPÄISCHE PATENTANMELDUNG

(11) **EP 0 644 218 A2**
(43) Veröffentlichungstag der Anmeldung: **22.03.1995**
(21) Anmeldenummer: 94111373.0
(22) Anmeldetag: 21.07.1994
(51) Int. Cl.: C08G 63/78, C08G 63/88, C08G 63/54, B29B 13/08

(54) **Verfahren zur Herstellung hochmolekularer Polyester**

(30) Priorität: 21.09.1993 DE 4331999
(71) Anmelder: GAF-HÜLS CHEMIE GMBH, D-45764 Marl (DE)
(72) Erfinder: Grosse-Puppendahl, Thomas, D-45721 Haltern (DE); Kleine Homann, Walter, Dr., D-48249 Dülmen (DE)

(57) **Zusammenfassung**

Es soll ein hochmolekularer Polyester so hergestellt werden, daß es möglich ist, auch kleinere Mengen mit sehr hohem Molekulargewicht in sehr kurzer Zeit vorteilhaft zugänglich zu machen.

Dies wird durch Herstellung eines Polyesters mit Anteilen an einem Alkendiol erreicht, indem die Polykondensationsstufe bis zu einer Viskositätszahl von 5 bis 150 cm³/g geführt wird und der so erhaltene Polyester anschließend bis zum Erreichen der notwendigen Viskositätszahl einer Behandlung mit ionisierenden Strahlen unterworfen wird.

Mit Hilfe des erfindungsgemäßen Verfahren gelingt es, hochmolekulare Polyester mit dem gewünschten Eigenschaftsbild zu erhalten.

## Beschreibung

Gegenstand der Erfindung ist ein Verfahren zur Herstellung von hochmolekularen Polyestern durch Umsetzen organischer Dicarbonsäure oder deren Derivate mit einem Gemisch aus Alkan- und Alkendiolen unter weitgehendem Ausschluß von Sauerstoff in Gegenwart eines Katalysators.

Hochmolekulare Polyester sind ausgezeichnete Werkstoffe mit spezifischen Eigenschaften, die sie befähigen, als Rohstoff für technisch hochwertige, stark belastbare Produkte zu dienen. Typisch für diesen Anwendungsbereich ist, daß häufig - nach technischen Maßstäben beurteilt - relativ kleine Mengen mit einem exakt vorgegebenen hohen Molekulargewicht nachgefragt werden.

Da in der großtechnischen Produktion Polyester kontinuierlich bzw. diskontinuierlich in großen Mengen mit einem einheitlichen Molekulargewicht anfallen, ist es meist unwirtschaftlich und technisch auch schwierig, kleinere Teilmengen mit einem festgelegten hohen Molekulargewicht zur Verfügung zu stellen.

Aus dem Stand der Technik sind Polyester mit hohem Molekulargewicht bekannt. Sie enthalten u. a. Reste ungesättigter Monomerkomponenten, die ggf. mit thermolabilen Verbindungen vernetzt werden (DE-OSS 25 09 726; 25 09 790; 25 52 424). Charakterisch für diesen Stand der Technik ist, daß bereits bei der Herstellung das endgültige Molekulargewicht festgelegt werden muß. Eine nachträgliche Manipulation des Molekulargewichtes ist unmöglich bzw. führt zu einem Abfall der Produkteigenschaften.

Ferner ist es aus dem Stand der Technik bekannt, Polyester einer Festphasennachkondensation zu unterwerfen. Hierbei sind üblicherweise jedoch relativ lange Zeiten erforderlich. Weiterhin wird nur eine geringfügige Erhöhung der Viskosität erreicht.

Aufgabe der vorliegenden Erfindung war es, einen Weg zu finden, auf dem es möglich ist, auch kleinere Mengen Polyester mit hohem Molekulargewicht in kurzer Zeit vorteilhaft herzustellen.

Diese Aufgabe wird erfindungsgemäß durch ein Verfahren gelost, in dem die Polykondensationsstufe bis zu einer Viskositätszahl im Bereich von 5 bis 150 cm³/g geführt wird und der so erhaltene Polyester anschließend einer Behandlung mit ionisierenden Strahlen bis zum Erreichen der notwendigen Viskositätszahl unterworfen wird.

Die Polyester werden durch Veresterung oder Umesterung und anschließende Polykondensation von organischen Dicarbonsäuren oder deren polyesterbildenden Derivaten sowie dem entsprechenden Diolgemisch in Gegenwart von Katalysatoren hergestellt (Sorenson und Campbell, **Preparative Methods of Polymer Chemistry**, Interscience Publishers Inc., (N. Y.), 1961, Seiten 111 bis 127; **Kunststoff-Handbuch**, Band VIII, C. Hanser Verlag München, 1973; J. Polym. Sci., Part A 1, 4 Seiten 1851 bis 1859, 1966).

Die Reaktionstemperaturen liegen im Bereich von 100 bis 350 °C, vorzugsweise im Bereich von 140 bis 280 °C. Die genannte Reaktion wird unter weitgehendem Ausschluß von Sauerstoff durchgeführt. Aus diesem Grunde wird in einer Intertgasatmosphäre gearbeitet. Als Inertgas eignen sich z. B. Edelgase, Stickstoff, Kohlendioxid etc. Es wird bei Normaldruck oder im Vakuum gearbeitet. Bevorzugt wird die Polykondensationsstufe im Vakuum durchgeführt.

Als organische Dicarbonsäure werden (cyclo)aliphatische und aromatische Säuren, ggf. auch im Gemisch, eingesetzt. Sie weisen 2 bis 36, vorzugsweise 4 bis 18 C-Atome im Kohlenstoffgerüst auf.

Als (cyclo)aliphatische Säuren seien beispielsweise 1.4-Cyclohexandicarbonsäure, Adipinsäure, Sebacinsäure, Azelainsäure, Decadicarbonsäure, Dimerfettsäuren genannt; als aromatische Säuren kommen hauptsächlich Phthalsäure, Isophthalsäure, Naphthalindicarbonsäure und insbesondere Terephthalsäure in Frage. Die Säuren können jeweils einzeln oder auch im Gemisch eingesetzt werden.

Die Diolkomponente wird einerseits durch Alkandiole mit 2 bis 12 C-Atomen in der Kohlenstoffkette gebildet. Bevorzugt sind hierbei Ethylenglykol, Butandiol-1.4 und Hexandiol-1.6. Zum anderen werden Alkendiole mit 4 bis 12 C-Atomen in der Kohlenstoffkette eingesetzt. Bevorzugt werden Butendiol-1.4., 2-Pentendiol-1.5, 3-Methyl-2-penten-1.5-diol verwendet.

Bis zu 30 Mol-% der Alkandiolkomponente des Polyesters können durch andere Diole, wie beispielsweise Neopentylglykol, 1.4- bzw. 1.3-Dimethylolcyclohexan oder deren Gemisch ersetzt sein.

Das Alkandiol und Alkendiol werden im Verhältnis 0,1 bis 99,9 Mol-% zu 99,9 bis 0,1 Mol-%, vorzugsweise 80 bis 99,5 Mol-% zu 20 bis 0,5 Mol-% eingesetzt.

Unter den Begriff Polyester werden auch Blockcopolyester gerechnet. Derartige Produkte werden z. B. in **Chimia** 28 (9), Seiten 544 bis 552 (1974) und in **Rubber Chemistry and Technology** 50, Seiten 688 bis 703 (1977) beschrieben. Diese Blockcopolyester enthalten neben den obengenannten aromatischen Dicarbonsäuren und Diolen ein Poly(oxialkylen)diol mit einem Molgewicht im Bereich von etwa 600 bis 2 500. Bevorzugte Poly(oxialkylen)diole sind Poly(oxiethylen)diol, Poly(oxipropylen)diol und Poly(oxitetramethylen)diol. Der Anteil der Poly(oxialkylen)diole liegt im Bereich von 4 bis 40 Gew.-%, vorzugsweise von 10 bis 35 Gew.-% (bezogen auf den gesamten Blockcopolyester).

Nach Beendigung der Polykondensation weist der Polyester eine Viskositätszahl von 5 bis 150 cm³/g auf. Für die Verwendung als Formmasse wird eine Viskositätszahl im Bereich von 50 bis 150 cm³/g und für andere Anwendungsbereiche, wie z. B. als Polyesterol für Polyurethane oder bei pulverförmigen Gebrauchsformen, von 10 bis 60 cm³/g angestrebt.

Im Anschluß an die Polykondensationsstufe wird der Polyester einer ionisierenden Strahlung ausgesetzt. Es ist aber auch möglich, den Polyester zu Formmassen, Folien, Schmelzklebern oder Pulverlacken weiterzuverarbeiten und erst dann die Bestrahlung vorzunehmen. Schließlich ist es nicht ausgeschlossen, erst die technische Endform, wie z. B. Formteile, Überzüge etc., herzustellen und diese dann der Bestrahlung auszusetzen.

In der Endform weisen die Polyester eine Viskositätszahl von ≦ 500 cm³/g, vorzugsweise von 10 bis 400 cm³/g und insbesondere von 20 bis 350 cm³/g auf. Ferner ist es möglich, die Polyester so lange zu bestrahlen, daß ein duromeres Produkt erhalten wird.

Für den zweiten Schritt, der Behandlung mit ionisierenden Strahlen, werden marktübliche Quellen für β-, γ- bzw. UV-Strahlen eingesetzt. So werden als β-Strahlenquelle Elektronenstrahlbeschleuniger mit einer Leistung von 150 kV bis 5 MV, als γ-Strahlenquellen z. B. Co⁶⁰ - bzw. Cs¹³⁷ -Präparate mit hoher Strahlungsleistung verwendet.

Die Wellenlänge der angewendeten UV-Strahlung liegt im Bereich von 100 bis 600 nm, vorzugsweise im Bereich von 150 bis 400 nm. Die eingestrahlte erforderliche Dosis für die β- bzw. γ-Strahlung liegt im Bereich von 1 bis 1 000 kGy, vorzugsweise im Bereich von 20 bis 800 kGy.

Die erfindungsgemäß erhaltenen Polyester können auf üblichen Maschinen durch Spritzguß oder Extrusion zu Formmassen verarbeitet werden.

Die Polyester können noch Hilfs- und Zusatzstoffe enthalten. Hierfür kommen z. B. Nucleierungs-, Mattierungs-, Fließmittel, Photoinitiatoren oder andere Verarbeitungshilfsmittel sowie Pigmente, Füll- und Verstärkungsstoffe in Frage.

Nucleierungs-, Mattierungs-, Fließmittel, Photoinitiatoren oder andere Verarbeitungshilfsmittel können in Mengen bis zu 6 Gew.-%, bevorzugt von 0,2 bis 3,5 Gew.-%, bezogen auf die Gesamtmischung, im Polyester enthalten sein.

Pigmente, Füll- und Verstärkungsstoffe sind in Mengen bis zu 60 Gew.-%, bevorzugt von 1 bis 50 Gew.-%, bezogen auf die Gesamtmischung, im Polyester enthalten.

Das erfindungsgemäße Verfahren weist eine Reihe von Vorteilen auf:
- Es können große Mengen an Grundpolykondensat schnell und wirtschaftlich kontinuierlich oder diskontinuierlich hergestellt werden.
- Es kann im Vergleich zum Stand der Technik sehr schnell die gewünschte hohe Endviskositätszahl erreicht werden.
- Insbesondere kleinere Mengen an Polyester können gezielt auf eine geforderte hohe Viskositätszahl wirtschaftlich eingestellt werden.
- Die guten Allgemeineigenschaften wie thermische bzw. mechanische Stabilität, Verarbeitungsstabilität, Eigenfarbe u. ä. werden nicht negativ beeinflußt.

Ausgehend von den erfindungsgemäßen Polyestern werden Formmassen erhalten, aus denen Folien, Ummantelungen, Profile, Rohre, Hohlkörper sowie Formteile nach dem Spritzguß- oder Extrusionsverfahren hergestellt werden. Darüber hinaus können die erfindungsgemäßen Polyester in Überzugsmitteln oder Klebstoffen eingesetzt werden.

Der angeführte Parameter J wurde mit Hilfe der nachstehend genannten Meßmethode bestimmt:
Die **Bestimmung der Viskositätszahl** (J-Wert) erfolgte an Lösungen von 0,5 g Polyester in 100 ml Phenol/o-Dichlorbenzol (Gewichtsverhältnis 1 : 1) bei 25 °C (DIN 16 779).

Die mit Buchstaben gekennzeichneten Versuche sind nicht erfindungsgemäß. -

### Beispiele

### Beispiel A

100 Gew.-Teile eines thermoplastischen Polyesters mit einem J-Wert von 108 cm³/g, der durch Umesterung von Dimethylterephthalat mit Butandiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 150 kGy ausgesetzt. Der Polyester weist eine Lösungsviskosität J von 105 cm³/g auf. Bei Erhöhung der Strahlungsdosis auf 300 kGy weist der Polyester dann eine Lösungsviskosität J von 107 cm³/g auf.

### Beispiel 1

100 Gew.-Teile eines thermoplastischen Polyesters mit einem J-Wert von 110 cm³/g, der durch Umesterung von Dimethylterephthalat mit einem Diolgemisch bestehend aus 99 Mol-% Butandiol-1.4 und 1 Mol-% 2-Butendiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 150 kGy ausgesetzt. Der Polyester weist dann eine Lösungsviskosität J von 130 cm³/g auf. Bei Erhöhung der Strahlungsdosis auf 300 kGy weist der Polyester dann eine Lösungsviskosität J von 204 cm³/g auf.

### Beispiel 2

100 Gew.-Teile eines thermoplastischen Polyesters mit einem J-Wert von 115 cm³/g, der durch Umesterung von Dimethylterephthalat mit einem Diolgemisch bestehend aus 95 Mol-% Butandiol-1.4 und 5 Mol-% 2-Butendiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 150 kGy ausgesetzt. Der Polyester ist in dem für die Bestimmung des J-Wertes üblichen Lösemittelgemisch Phenol/o-Dichlorbenzol nicht mehr vollständig löslich und weist Gelanteile auf. Bei Erhöhung der Strahlungsdosis auf 300 kGy sind die Produkte nahezu unlöslich und weisen sehr hohe Gelanteile auf.

### Beispiel 3

100 Gew.-Teile eines thermoplastischen Polyesters mit einem J-Wert von 111 cm³/g, der durch Umesterung von Dimethylterephthalat mit einem Diolgemisch bestehend aus 90 Mol-% Butandiol-1.4 und 10 Mol-% 2-Butendiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 150 kGy ausgesetzt. Der Polyester ist in dem für die Bestimmung des J-Wertes üblichen Lösemittelgemisch Phenol/o-Dichlorbenzol nicht mehr vollständig löslich und weist Gelanteile auf. Bei Erhöhung der Strahlungsdosis auf 300 kGy sind die Produkte nahezu unlöslich und weisen sehr hohe Gelanteile auf.

### Beispiel 4

100 Gew.-Teile eines thermoplastischen Polyesters mit einem J-Wert von 111 cm³/g, der durch Umesterung von Dimethylterephthalat mit einem Diolgemisch bestehend aus 80 Mol-% Butandiol-1.4 und 20 Mol-% 2-Butendiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 150 kGy ausgesetzt. Der Polyester ist in dem für die Bestimmung des J-Wertes üblichen Lösemittelgemisch Phenol/o-Dichlorbenzol nicht mehr vollständig löslich und weist Gelanteile auf. Bei Erhöhung der Strahlungsdosis auf 300 kGy sind die Produkte nahezu unlöslich und weisen sehr hohe Gelanteile auf.

### Beispiel B

100 Gew.-Teile eines thermoplastischen Polyesters mit einem J-Wert von 81 cm³/g, der durch Veresterung von Adipinsäure mit Butandiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 50 kGy ausgesetzt. Der Polyester weist dann eine Lösungsviskosität J von 80 cm³/g auf. Bei Erhöhung der Strahlungsdosis auf 300 kGy weist der Polyester dann eine Lösungsviskosität J von 78 cm³/g auf.

### Beispiel 5

100 Gew.-Teile eines thermoplastischen Polyesters mit einem J-Wert von 92 cm³/g, der durch Veresterung von Adipinsäure mit einem Diolgemisch bestehend aus 80 Mol-% Butandiol-1.4 und 20 Mol-% 2-Butendiol-1.4 unter Verwendung von iso-Propyltitanat als Katalysator und anschließender Polykondensation unter vermindertem Druck nach den bekannten Verfahren hergestellt wurde, wird einer β-Strahlung mit einer Dosis von 50 kGy ausgesetzt. Der Polyester weist dann eine Lösungsviskosität J von 118 cm³/g auf. Bei Erhöhung der Strahlungsdosis auf 300 kGy sind die Produkte nahezu unlöslich und weisen sehr hohe Gelanteile auf.

## Patentansprüche

1. Verfahren zur Herstellung von hochmolekularem Polyester durch Umsetzen organischer Dicarbonsäure oder deren Derivate mit einem Gemisch aus Alkan- und Alkendiolen unter weitgehendem Ausschluß von Sauerstoff und in Gegenwart eines Katalysators,
dadurch gekennzeichnet,
daß die Polykondensationsstufe bis zu einer Viskositätszahl im Bereich von 5 bis 150 cm³/g geführt wird und der so erhaltene Polyester anschließend einer Behandlung mit ionisierenden Strahlen bis zum Erreichen der notwendigen Viskositätszahl unterworfen wird.

2. Verfahren gemäß Anspruch 1,
dadurch gekennzeichnet,
daß die erste Polykondensationsstufe zu einer Viskositätszahl im Bereich von 10 bis 60 cm³/g geführt wird.

3. Verfahren gemäß Anspruch 1,
dadurch gekennzeichnet,
daß die erste Polykondensationsstufe zu einer Viskositätszahl im Bereich von 50 bis 150 cm³/g geführt wird.

4. Verfahren gemäß den Ansprüchen 1 bis 3,
dadurch gekennzeichnet,
daß als ionisierende Strahlung β-Strahlung oder γ-Strahlung verwendet wird.

5. Verfahren gemäß den Ansprüchen 1 bis 4,
dadurch gekennzeichnet,
daß die β- bzw. γ-Strahlung mit einer Dosis von 1 kGy bis 1 000 kGy eingestrahlt wird.

6. Verfahren gemäß den Ansprüchen 1 bis 3,
dadurch gekennzeichnet,
daß als ionisierende Strahlung UV-Strahlung im Wellenlängenbereich von 100 bis 600 nm und bevorzugt von 150 bis 400 nm eingesetzt wird.

7. Verfahren gemäß den Ansprüchen 1 bis 6,
dadurch gekennzeichnet,
daß ein Duromeres erhalten wird.

8. Verfahren gemäß den Ansprüchen 1 bis 6,
dadurch gekennzeichnet,
daß eine endgültige Viskositätszahl von ≦ 500 cm³/g eingestellt wird.

9. Verfahren gemäß den Ansprüchen 1 bis 6,
dadurch gekennzeichnet,
daß eine endgültige Viskositätszahl von ≦ 400 cm³/g und bevorzugt von ≦ 350 cm³/g eingestellt wird.

10. Verwendung der Polyester hergestellt gemäß den Ansprüchen 1 bis 9 für Profile, Rohre, Hohlkörper sowie Formteile hergestellt nach dem Spritzguß- oder Extrusionsverfahren.

11. Verwendung der Polyester hergestellt gemäß den Ansprüchen 1 bis 9 für Folien, Ummantelungen oder Überzugsmittel.

12. Verwendung der Polyester hergestellt gemäß den Ansprüchen 1 bis 9 für Schmelzkleber.

13. Verwendung der Polyester hergestellt gemäß den Ansprüchen 1 bis 9 für Überzüge auf Basis pulverförmiger Überzugsmittel.
